# EUROPEAN PATENT APPLICATION

(11) **EP 3 264 678 A1**
(43) Date of publication of application: **03.01.2018**
(21) Application number: 16305803.5
(22) Date of filing: 30.06.2016
(51) Int. Cl.: H04L 12/24, H04L 29/08, H04L 29/12

(54) **METHOD AND DEVICE FOR PROCESSING, AT A NETWORK EQUIPMENT, A PROCESSING REQUEST FROM A TERMINAL**

(71) Applicant: Thomson Licensing, 92130 Issy-les-Moulineaux (FR)
(72) Inventor: ONNO, Stéphane, 35576 Cesson-Sevigne (FR); LEGALLAIS, Yvon, 35576 Cesson-Sevigne (FR); GOUACHE, Stéphane, 35576 Cesson-Sevigne (FR)
(74) Representative: Huchet, Anne

(57) **Abstract**

Network equipment (100) for processing a processing request from a terminal (106) configured to be associated with a network (105) to which the network equipment (100) can be connected,
comprising a load balancer (222) equipped with at least one memory and at least one processing circuitry configured to perform:
- receiving from the terminal (106), a request message provided as part of the processing request;
- forwarding concurrently the received request message to at least two processing units (224) amongst a plurality of processing units of the network equipment (100), said processing units being in connection with a common a database unit (225);
- receiving one or several response messages from the processing units (224) after processing of the received request message;
- transmitting to the terminal (106) the first received response message.

## Description

### TECHNICAL FIELD

The present disclosure generally relates to the network virtualization and more particularly to network virtualization services and functions associated with cloud commodity computing hardware.

### BACKGROUND

This section is intended to introduce the reader to various aspects of art, which may be related to various aspects of the present disclosure that are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

A residential or corporate gateway is a network equipment interfacing a LAN (Local Area Network) to the Internet. Such an equipment may usually provide - in addition to being a cable, DSL (Digital Subscriber Line) or fiber modem - different features like router, DNS (Domain Name System) proxy, local DHCP (Dynamic Host Configuration Protocol) server, wireless access point, firewall, DynDNS, bridge, etc.

The development of the cloud technologies (such as the virtualization of network functions) allows the emergence of a new architecture for Internet access wherein services running in the residential gateway are moved in the NSP's (Network Service Provider) datacenter. By reducing the complexity of the residential gateway, NSPs hope to reduce the time to market to deploy new services and to ease troubleshooting operations.

Networking Function Virtualization (NFV) enables the provision of network functions for home or corporate gateways directly from the NSP's facility in a cloud provisioning manner. Virtual Customer Premise Equipment (VCPE) is part of the so called Network Function Virtualization paradigm that is about executing network functions (e.g. Router, Deep Packet Inspection, DNS server, Firewall) onto commoditized hardware hosting a virtual machine infrastructure (e.g. private or public cloud infrastructure) instead of requiring specific on purpose hardware. To that end, the home gateway acts as a bridge (BRG) and needs to connect to a virtual gateway (VG) in the cloud to reach the hosts where the network functions are provisioned and run, even for basic functions such as DHCP, Firewall, DNS and UI (User Interface).

Nevertheless, the virtualization of network functions (such as DHCP function) raises some constraints because of the fact that such functions were not originally configured to fully scale with cloud infrastructure unlike applicative functions.

In particular, as already known, DHCP functions can be threefold:
- a DHCP server which offers IP leases to a DHCP client running on devices is a monolithic and stateful function and bounds to an interface that should be on the same subnet that the IP addresses it offers;
- a DHCP Relay is a transparent agent that only mediates DHCP requests from server to client but is not allowed to offer IP addresses. More particularly, when DHCP clients and associated servers do not reside on the same IP network or subnet, a DHCP relay agent can transfer DHCP messages between them. The DHCP relay agent operates as the interface between DHCP clients and the server. It listens to client requests and adds vital configuration data, such as the client's link information, which is needed by the server to allocate the address for the client. When the DHCP server responds, the DHCP relay agent forwards the reply back to the DHCP client;
- a DHCP Proxy operates between DHCP client and DHCP servers. The DHCP server function hosted within the DHCP proxy acts as a DHCP server that offers leases requested by its internal DHCP client. In that case, the proxy and upstream DHCP servers must synchronize the leases that have been given out.

Besides, a DHCP processing is defined by a set of constraints:
- the DHCP processing service shall reply to DHCP responses from an interface belonging to the same subnet;
- DHCP mainly relies on a two steps process bound together (e.g. Discover/Offer then Request/Acknowledgment) and can therefore be considered as a two steps stateful process (i.e. the capability to maintain a state, which means having information about what occurred previously);
- each DHCP lease is stick to T1/T2 timers, respectively renew and rebind timer. When renew time T1 has elapsed, the client can send a unicast DHCP renewal request to the previous server having provided an IP address. When the previous server does not respond, the client waits for the Rebind Time T2 and then sends a broadcast DHCP Request to reach a DHCP server on the network. The DHCP server should save the leases until and after expiration of the rebind time. The same client - which requests or renews a lease - expects to get the same IP address previously allocated to it;
- the DHCP server can offer IP addresses from the same subnet for any customer and the IP addresses leases must belong to each particular customer lease pool.

When a DHCP server fails, an additional latency and response time delay can be observed depending on when the crash occurs as regards pending two steps DHCP request. In case of a server failure, the client can have to wait the rebind time T2 to access the network again.

Therefore, there is a need to provide a DHCP service seamless for a client in case of failure of DHCP server.

### SUMMARY

The disclosure concerns a method for processing, at a network equipment, a processing request from a terminal configured to be associated with a network to which the network equipment can be connected,
comprising, at a load balancer of the network equipment:
- receiving from the terminal, a request message provided as part of the processing request;
- forwarding concurrently the received request message to at least two processing units amongst a plurality of processing units of the network equipment, said processing units being in connection with a common a database unit;
- receiving one or several response messages from the processing units after processing of the received request message;
- transmitting to the terminal the first received response message.

Thus, by duplicating the received request message, the network equipment can manage failure of a processing unit during a transaction, allowing service continuity.

In an embodiment, the load balancer can drop the subsequent response messages received after the first response message received.

In an embodiment, the received request message can be forwarded with a network identification information provided by a relay agent of the network equipment.

In an embodiment, upon receipt of a request message, a processing unit can send a read and lock request to the database unit.

In an embodiment, upon receipt of a read and lock request, the database unit can trigger a lock timeout.

In an embodiment, upon receipt of a read and lock request, the database unit can lock any transaction as regards the network except for the processing unit for which the read and lock request has been received first.

In an embodiment, when the reception of a read and lock request from a processing unit occurs after the reception of a prior read and lock request from another processing unit, a notification can be delivered to the processing unit having sent the subsequent read and lock request.

In an embodiment, the processing request can be a DHCP request configured to obtain an IP address.

In this embodiment, the received message can be either a DISCOVER message or a REQUEST message.

In an embodiment, the network identification information can specify a VxLan identification number associated with said network.

The present disclosure also relies on a network equipment for processing a processing request from a terminal configured to be associated with a network to which the network equipment can be connected,
comprising a load balancer equipped with at least one memory and at least one processing circuitry configured to perform,:
- receiving from the terminal, a request message provided as part of the processing request;
- forwarding concurrently the received request message to at least two processing units amongst a plurality of processing units of the network equipment, said processing units being in connection with a common a database unit;
- receiving one or several response messages from the processing units after processing of the received request message;
- transmitting to the terminal the first received response message.

In an embodiment, the load balancer can be further configured to drop the subsequent response messages received after the first response message received.

In an embodiment, the received request message can be forwarded with a network identification information provided by a relay agent of the network equipment.

In an embodiment, upon receipt of a request message, a processing unit can be configured to send a read and lock request to the database unit.

In an embodiment, upon receipt of a read and lock request, the database unit can trigger a processing timeout.

In an embodiment, upon receipt of a read and lock request, the database unit can lock any transaction as regards the network except for the processing unit for which the read and lock message has been received first.

In an embodiment, when the reception read and lock request of a processing unit occurs after the reception of a prior read and lock request from another processing unit, a notification can be delivered to the processing unit having sent the subsequent read and lock request.

Besides, the present disclosure is further directed to a non-transitory program storage device, readable by a computer, tangibly embodying a program of instructions executable by the computer to perform a method for processing, at a network equipment, a processing request from a terminal configured to be associated with a network to which the network equipment can be connected, said method comprising, at a load balancer of the network equipment:
- receiving from the terminal, a request message provided as part of the processing request;
- forwarding concurrently the received request message to at least two processing units amongst a plurality of processing units of the network equipment, said processing units being in connection with a common a database unit;
- receiving one or several response messages from the processing units after processing of the received request message;
- transmitting to the terminal the first received response message.

The present disclosure also relies on a computer program product stored on a non-transitory computer readable medium and comprising program code instructions executable by a processor for implementing a method for processing, at a network equipment, a processing request from a terminal configured to be associated with a network to which the network equipment can be connected, said method comprising at a load balancer of the network equipment:
- receiving from the terminal, a request message provided as part of the processing request;
- forwarding concurrently the received request message to at least two processing units amongst a plurality of processing units of the network equipment, said processing units being in connection with a common a database unit;
- receiving one or several response messages from the processing units after processing of the received request message;
- transmitting to the terminal the first received response message.

The method according to the disclosure may be implemented in software on a programmable apparatus. It may be implemented solely in hardware or in software, or in a combination thereof.

Some processes implemented by elements of the present disclosure may be computer implemented. Accordingly, such elements may take the form of an entirely hardware embodiment, an entirely software embodiment (including firmware, resident software, micro-code, etc.) or an embodiment combining software and hardware aspects that may all generally be referred to herein as "circuit", "module" or "system". Furthermore, such elements may take the form of a computer program product embodied in any tangible medium of expression having computer usable program code embodied in the medium.

Since elements of the present disclosure can be implemented in software, the present disclosure can be embodied as computer readable code for provision to a programmable apparatus on any suitable carrier medium. A tangible carrier medium may comprise a storage medium such as a floppy disk, a CD-ROM, a hard disk drive, a magnetic tape device or a solid state memory device and the like.

The disclosure thus provides a computer-readable program comprising computer-executable instructions to enable a computer to perform the method for processing, at a network equipment, a processing request according to the disclosure.

Certain aspects commensurate in scope with the disclosed embodiments are set forth below. It should be understood that these aspects are presented merely to provide the reader with a brief summary of certain forms the disclosure might take and that these aspects are not intended to limit the scope of the disclosure. Indeed, the disclosure may encompass a variety of aspects that may not be set forth below.

### BRIEF DESCRIPTION OF THE DRAWINGS

The disclosure will be better understood and illustrated by means of the following embodiment and execution examples, in no way limitative, with reference to the appended figures on which:
- Figure 1 is a schematic diagram of an example of an overall architecture of a network equipment adapted to implement some embodiments;
- Figure 2 shows a schematic diagram of an example of a network equipment of some embodiments;
- Figures 3 to 6 depict flow charts of examples of a method for processing a processing request implemented by some embodiments of the network equipment.

Wherever possible, the same reference numerals will be used throughout the figures to refer to the same or like parts.

### DETAILED DESCRIPTION

The following description illustrates the principles of the present disclosure. It will thus be appreciated that those skilled in the art will be able to devise various arrangements that, although not explicitly described or shown herein, embody the principles of the disclosure and are included within its scope.

All examples and conditional language recited herein are intended for educational purposes to aid the reader in understanding the principles of the disclosure and the concepts contributed by the inventor to furthering the art, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the principles of the disclosure. Similarly, it will be appreciated that any flow charts, flow diagrams, state transition diagrams, pseudocode, and the like represent various processes which may be substantially represented in computer readable media and so executed by a computer or processor, whether or not such computer or processor is explicitly shown.

The functions of the various elements shown in the figures may be provided with dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, read only memory (ROM) for storing software, random access memory (RAM), and nonvolatile storage.

In the claims hereof, any element expressed as a means and/or module for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The disclosure as defined by such claims resides in the fact that the functionalities provided by the various recited means are combined and brought together in the manner which the claims call for. It is thus regarded that any means that can provide those functionalities are equivalent to those shown herein.

In addition, it is to be understood that the figures and descriptions of the present disclosure have been simplified to illustrate elements that are relevant for a clear understanding of the present disclosure, while eliminating, for purposes of clarity, many other elements found in typical digital multimedia content delivery methods, devices and systems. However, because such elements are well known in the art, a detailed discussion of such elements is not provided herein. The disclosure herein is directed to all such variations and modifications known to those skilled in the art.

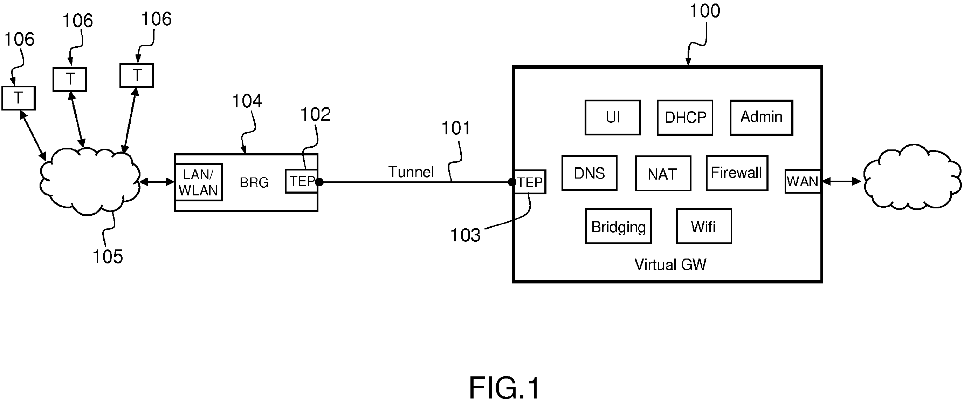

Figure 1 is a schematic diagram of an example of an overall architecture 100 of a network equipment 100, such as a virtual gateway (VGW) or a virtual customer premise equipment (VCPE). It is assumed that the gateway functionality is split in two parts, interconnected by mean of a tunnel 101, each part hosting a tunnel endpoint (TEP) 102, 103. This tunnel can be used to abstract from the underlying physical network topology while interconnecting the broadband residential gateway (BRG) (also called bridge or switch) 104 and the virtual gateway 100 at the link layer.

The left hand side (represented by the broadband residential gateway 104 (BRG)) can be considered, in one embodiment, to be at the customer's premises, whereas the right hand side (represented by the virtual gateway 100) can be located in a datacenter hosted, for instance, by a network operator. This datacenter can be distributed across multiple locations. In one embodiment, virtualized gateway functions can be mutualized to facilitate scaling and maintenance. The bridge 104 can be connected to a home (or business) network 105 (e.g. private network) such a LAN (Local Area Network) or WAN (Wide Area Network).

Virtual gateway deployment can be managed by a service orchestrator (not shown in the Figures) which coordinates the compute and networking configuration from the broadband residential gateway 104 to the datacenter so as to manage virtual gateway migration, service addition/removal or adjustment of QoS policies.

As shown in Figure 1, the virtual gateway 100 can execute network function such as UI (User Interface), DHCP server, DNS server, Firewall, NAT (Network Address Translation), bridging, Wi-Fi, etc.

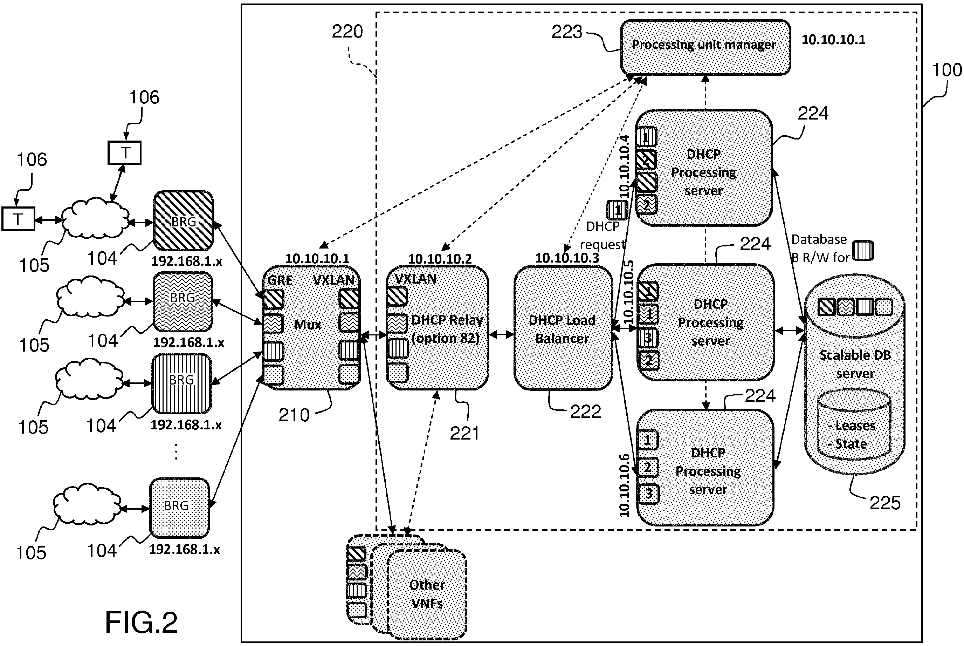

Figure 2 is a block diagram of one embodiment, depicting a virtual gateway 100 configured to implement a DHCP virtual network function (VNF) according to an embodiment of the present disclosure. For sake of clarity and simplicity, some elements of the virtual gateway are not shown in Figure 2. Naturally, the disclosure is not limited to the DHCP protocol, function or service.

The virtual gateway 100 can be connected to one or several broadband residential gateways 104, each BRG 104 being further adapted to be connected to a LAN 105 comprising one or several terminals 106.

As shown in Figure 2, at the entrance in the datacenter, a multiplexing function (MUX) 210 of the virtual gateway 100 can be provided to ensure connectivity between a physical broadband residential gateway 104 and the associated virtual gateway functions. The multiplexing function (MUX) 210 can be configured by the orchestrator with the customer's settings. This function can be implemented, for example, by a programmable switch, which may also provide connectivity to the WAN and cloud hosted services. In one embodiment, it is assumed this to be a large capacity switching fabric, possibly assisted by dedicated hardware. It can handle the termination of the tunnel towards the BRG 104 and can re-encapsulate the traffic towards the peer VGW services or tag the traffic with a customer ID before passing it to a mutualized service. As shown in the embodiment of Figure 1, the multiplexing function 210 can implement a tunnel end point (TEP) 103 and can re-encapsulate the traffic in a dedicated VxLAN (Virtual Extensible Local Area Network) for each customer.

Configuring the switching according to rules derived from customer specific preferences can allow building a service chain, connecting inputs and outputs of services. At a high level, gateway directed traffic can be switched to the adequate services (DHCP, DNS), whereas WAN directed traffic is switched toward NAT or firewall services.

Each service can be mutualized and parametrized with customer settings or implemented as a dedicated customer specific service. In such a manner, new services can be trialed with a subset of customers before being fully deployed and mutualized. For computing based mutualized services, using the VxLAN id as a derivation from the customer id (identifier) can allow retrieving the customer's context from a central database. For networking based services, the orchestrator is able to configure per customer-differentiated services, which can rely on the VxLAN id for flow differentiation. Finally, different overlays can be built for each VxLAN id, resulting in customer tailored service chaining. It is to be understood that the customer id identifier can be carried in a specific field of the encapsulation header of the overlay network such as VXLANs/VXLAN-GPE Identifier, GRE Identifier and so forth.

The BRG 104 can be built around its own switching fabric that interconnects the different network ports. The BRG 104 can implement in particular the logic for enabling Generic Routing Encapsulation (GRE) tunneling between the BRG 104 and a VCPE host (not shown). The GRE tunneling can be configured through an existing procedure (consecutively to a provisioning operation realized by the operator) like the one specified by Broadband Forum. Once the BRG 104 is connected to the access network, after the physical attachment (e.g. xDSL), the BRG 104 can broadcast a DHCP request. This is caught by the DHCP server residing in the first upstream IP enabled device, which may be the Broadband Network Gateway (BNG, the old BRAS). The DHCP server (more exactly its associated AAA server) can authenticate the BRG 104 thanks to its MAC (Media Access Control) address and return the corresponding configuration. This corresponding configuration can include the BRG IP address and the GRE tunnel endpoint IP address that is the IP address of the virtual machine hosting the tunnel end point (TEP) virtual function of the virtual gateway 100.

Once the network configuration is obtained, the BRG 104 can be configured to provide tunnel access (here is a GRE tunnel interface) while the virtual gateway 100 can be automatically configured in the virtual gateway host infrastructure.

In addition, as shown in the embodiment of Figure 2, in order to implement a DHCP virtual network function 220, the virtual gateway 100 can comprise a DHCP relay virtual network function 221 (also called DHCP relay agent). In one embodiment, for example, DHCP can be configured to monitor customer VXLANs in order to provide a Customer Identifier (e.g. identified by a VXLAN ID) associated with the BootP/Option 82 (which was designed to allow a DHCP relay agent to insert circuit-specific information into a message that is being forwarded to a DHCP server) on each DHCP message it receives. The DHCP relay 221 can then forward the DHCP message to a DHCP load balancer 222 as a unicast UDP DHCP message that prevents broadcast message issues. The DHCP relay 221 can be seen as the DHCP server from the customer's LAN 105, its VXLAN interface IP address can be set in accordance with the IP address range defined in DHCP parameters.

In one embodiment, the virtual gateway 100 can further comprise a DHCP load balancer 222, a cluster manager 223, one or several DHCP processing servers 224 (in the non-limitative example of Figure 2, three processing servers are illustrated) and a scalable database server 225 comprising at least one database. In a variant, the database server 225 and the associated database can be arranged in different equipments.

The DHCP load balancer 222 can compute or obtain from the processing unit manager 223 (also called cluster manager 223) workload information associated with DHCP processing servers 224 (i.e. the current workload of each processing server) and can decide to distribute the DHCP messages to balance the workload among the available DHCP processing servers 224. Naturally, the load balancer 222 and the DHCP relay 221 can be integrated within a sole execution module.

In one embodiment of the present principles, after receiving a DHCP request message (e.g. DHCP DISCOVER or DHCP REQUEST) issued by a terminal 106 of a network 105 of a customer X 104 through the DHCP relay 221 (or a DHCP client, not shown), the load balancer 222 can concurrently forward (or duplicate) the received DHCP request message to a plurality of DHCP processing servers 224. In order to determine which DHCP processing servers 224 should receive the DHCP request message, the load balancer 222 can for instance use the workload information associated with the DHCP servers 224 provided by the DHCP processing unit manager 223. In another embodiment, the load balancer 222 can transfer the request message to a number of processing servers 224 determined by the processing unit manager 223 based on available resources and/or a desired response speed (more processing servers 224 are involved, faster the response will be). In a further variant, the number of processing servers can depend on the considered service or customer 104 (bridge). In another embodiment, the processing unit manager 223 can provide a list of available processing servers so that the load balancer 222 can select several processing servers 224 from the list according to a defined rule (such as a round-robin scheduling).

When several DHCP response messages (e.g. DHCP OFFER, DHCP ACK) from the DHCP processing servers 224 are sent in reply to the DHCP request message, the load balancer 222 can send back to the requesting terminal 106 only the first received DHCP response message, the subsequent response messages received being dropped.

Besides, the load balancer 222 can be further configured to manage event failures of DHCP processing servers 224. Depending on the internal DHCP failure detection rules (e.g. processing response time, number of successive non-responding request, etc.), the load balancer 222 can request the allocation of a new processing server 224 to the processing unit manager 223 in order to further redirect the DHCP request messages to this new processing server 224.

It should be understood that the processing unit manager 223 can start or delete the processing server instances depending on the overall server load.

In the example shown in Figure 2, the database server 225 can be connected with every DHCP processing server 224 such that one database server 225 can be shared between a plurality of DHCP processing servers 224.

Thus, each DHCP processing server 224 receiving the same DHCP request message (e.g. DHCP DISCOVER, DHCP OFFER) can communicate with the database server 225 to either assign a temporary IP address (in response to a DHCP DISCOVER) or a final IP address (in response to a DHCP REQUEST).

In Figure 2, it is to be appreciated that the illustrated blocks or modules correspond to functional modules, which may or may not correspond to distinguishable physical units. For example, a plurality of such modules may be associated in a unique component or circuit, or correspond to software functionalities. Moreover, a module may potentially be composed of separate physical entities or software functionalities.

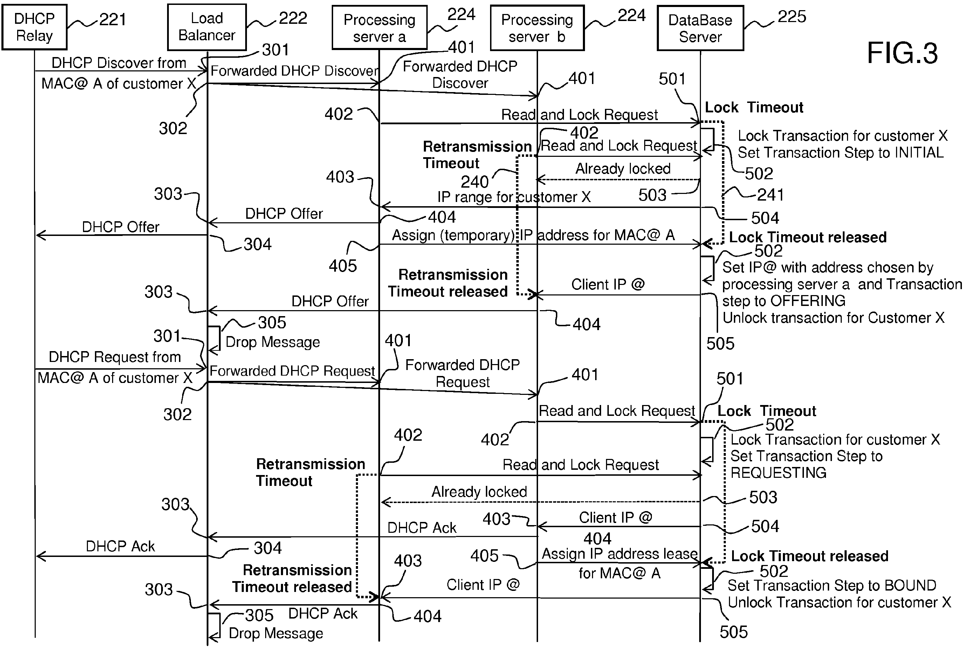

Figure 3 is a block diagram of an embodiment having a load balancer 222 and DHCP processing servers 224 as the ones provided in conjunction with Figure 2.

Figure 3 provides an example where the load balancer 222 can process a request message (e.g. DHCP DISCOVER, DHCP REQUEST) from a terminal 106 (identified by its MAC address: MAC@A) connected to a network 105 of a customer X 104. In particular, upon receipt of a DHCP request message from the terminal 106 (MAC address: MAC@A) of the customer X 104, the load balancer 222 can:
- process (at step 301) the DHCP request message (DHCP DISCOVER, DHCP REQUEST) part of a DHCP request and determine the DHCP processing servers 224 (e.g. from the workload information provided by the DHCP processing unit manager 223) which should receive the DHCP request message;
- forward (at step 302) the DHCP request message of the terminal 106 to the determined plurality of processing servers 224. The forwarding of the DHCP request message can lead to the concurrent transmission of several messages by the load balancer 222. In the illustrative, but non limitative, example of Figure 3, only two processing servers 224 (namely "processing server a" and "processing server b") are illustrated;
- receive (at step 303) several response messages (DHCP OFFER, DHCP ACK) from the processing servers 224. In the example, two response messages DHCP OFFER are received in reply to the DHCP DISCOVER message, one from the processing server a 224 and one from the processing server b 224;
- transmit (at step 304) to the requesting terminal 106, the response message (DHCP OFFER, DHCP ACK) which has been received first by the load balancer 222. In the example of Figure 3, the response message DHCP OFFER of the processing server a 224 is first received by load balancer 222 ;
- drop (at step 305) the response messages subsequently received by the load balancer 222. In the example of Figure 3, the subsequent response message DHCP OFFER of the processing server b 224 is dropped.

Figure 3 further provides an example where the processing servers 224 can process the request message (e.g. DHCP DISCOVER, DHCP REQUEST) forwarded by the load balancer 222 as follows:
- obtaining (at step 401) the customer identification (customer ID) from the data carried by the Bootp/Option 82 of the forwarded request message (DHCP DISCOVER, DHCP REQUEST);
- requesting (at step 402) a context (also called configuration) from the scalable database server 225 based on, for instance, the customer ID and the MAC address of the requesting terminal 106 contained in the forwarded request message. In the example, this can be achieved thanks to a "Read and Lock" request intended to block, at the database server 225, any transaction associated with customer X (to which the requesting terminal 106 belongs to). Only the processing server 224 - whose the Read and Lock request has been received first by the database server 225 - is able to update context information associated with the requesting terminal 106 of the customer X 104 in the database, other processing servers 224 cannot. It is to be noted that a DHCP client can have different states depending on messages that have been exchanged with a server. In particular, the database server 225 can keep a state of the transaction step of a DHCP request and a state of the IP address lease associated with the DHCP client to reply coherently with the different messages coming from this DHCP client. In an example, the state of a transaction step can be:
   ▪ INITIAL : DHCP_DISCOVER received,
   ▪ OFFERING: DHCP_OFFER has been sent,
   ▪ REQUESTING : DHCP_REQUEST has been received,
   ▪ BOUND : DHCP_ACK has been sent and IP address is leased.
   The context can then comprise IP address range, IP address current leases, IP address temporary reserved, a state of transaction step associated with a requesting terminal of a given customer. In an embodiment, the Read and Lock request can further comprise the transaction state of the DHCP request from the requesting terminal 106 and/or an IP address range associated with the customer X to which the terminal 106 belongs to;
- receiving (at step 403) the requesting context from the database server 225. As depicted in the example of Figure 3, the processing server a 224 receives, from the database server 225, an IP address range for customer X in response to its Read and Lock request;
- processing (at step 404) the DHCP request message (DHCP DISCOVER, DHCP REQUEST) with the context information received from the database server 225 to establish and deliver the corresponding response message (such as DHCP OFFER, DHCP ACK) to the requesting terminal 106. The response message can comprise the customer ID information within the Bootp/Option 82. In case a discrepancy appears between the received DHCP message (DHCP DISCOVER, DHCP REQUEST) and the associated state stored in the database of the server 225, the incorrect DHCP message (e.g. duplicate request or release from the same customer 104) received from the terminal 106 can be dropped;
- requesting (at step 405) an assignment of the processed target state of the DHCP request back to the database server 225, via an appropriate write request. The write request can comprise the following information:
   ▪ customer ID extracted from the DHCP message (Bootp/Option 82),
   ▪ MAC address : MAC address of the requesting terminal 106,
   ▪ transaction step: Discover_Received (INITIAL state), Offer_Sent (OFFERING state), Request_Received (REQUESTING state), Ack_sent (BOUND state),
   ▪ IP address : assigned or reserved (temporary) IP address for the requesting terminal 106.
   In the example of Figure 3, after receiving an IP address range from the database server 225, the processing server a 224 assigns (step 404) a temporary IP address to the terminal 106 having the MAC address MAC@A and requests (step 405) an update of the database server 225 (e.g. via the write request "Assign (temporary) IP address for MAC@A").

Besides, in one embodiment, the sending of a "Read and Lock" request (step 402) can trigger, at a processing server 224, a retransmission timeout 240 (e.g. corresponding to the processing time for a transaction). At the end of the retransmission timeout 240, the processing server 224 can be configured to send back the "Read and Lock" request in case no response has been received from the database server 225 during the whole timeout 240. For conciseness reasons, only some retransmission timeouts 240 have been illustrated in the examples of Figures 3 to 5.

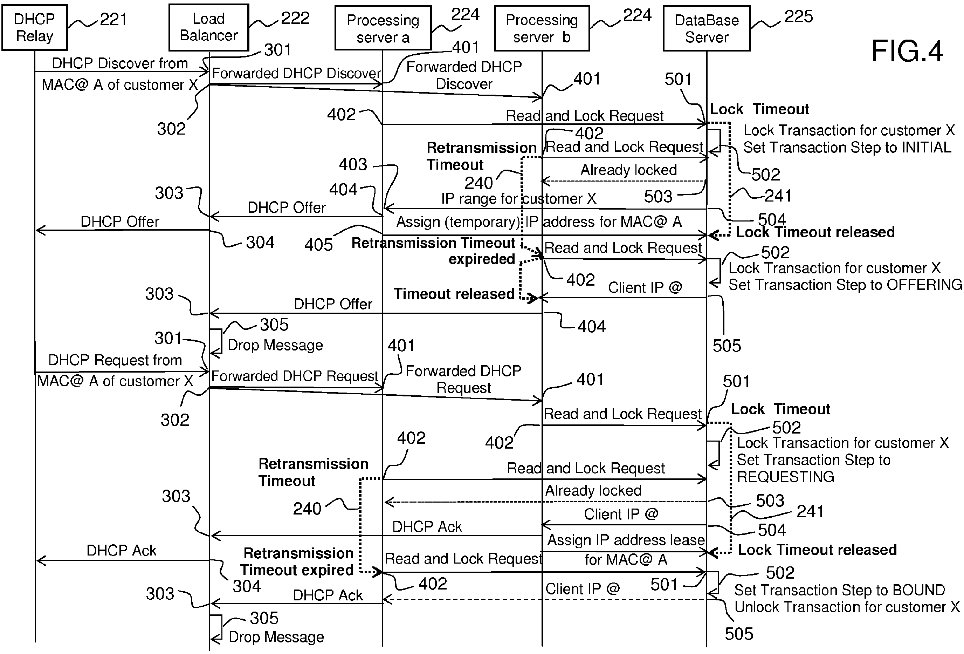

In addition, Figure 3 depicts an example where the database server 225 can process the request messages (e.g. "Read and Lock" request, "Assign (temporary) IP address for MAC@A" write request, etc.) as follows:
- triggering (at step 501) a lock timeout 241 upon receipt of a first Read and Lock request from a processing server 224 associated with the requesting terminal 106 (e.g. the Read and Lock request sent by the processing server a 224 in the example of Figure 3). The lock timeout 241 prevents any subsequent processing servers 224 (e.g. the processing server b 224 with respect to the DHCP DISCOVER message in Figure 3) from accessing the database of the database server 225. The lock timeout can be released upon receipt of a write request from the allowed processing server 224 (e.g. the reception of the request "Assign temporary IP address for MAC@A" from the processing server a 224 stops the lock timeout, as shown in Figure 3);
- updating (at step 502) the state of the transaction step associated with the customer X (e.g. INITIAL, OFFERING, REQUESTING, BOUND) upon receipt of a Read and Lock request from a processing server 224;
- sending (at step 503) a notification (e.g. the notification "Already locked" In Figure 3) to a processing server 224 (e.g. processing server b in the example of Figure 3) which has sent a Read and Lock request subsequently to a first Read and Lock request (e.g. sent by processing server a in the example of Figure 3 as regards the DHCP DISCOVER message). Such a notification can indicate that the database server 225 is already locked for another processing server 224 whose the Read and Lock request has been received first by the database server 225;
- forwarding (at step 504) the context associated with the customer X as required by the processing server 224 (at step 403) having sent the first Read and Lock request;
- transmitting (at step 505) the IP address reserved or assigned to the requesting terminal 106, as updated in the database, to subsequent processing servers 224 which have sent a Read and Lock request subsequently to the first received "Read and Lock" request (e.g. the processing server b 224 as regards the DHCP DISCOVER message). In one embodiment (called non solicited message mode), the transmission of the IP address reserved or assigned to the subsequent processing servers 224 is performed automatically without requiring the reception of a new Read and Lock request. The database server 225 has stored the Read and Lock request received from the subsequent processing servers 224. In that case, the "Already locked" notification can be followed by a non-solicited message from the database forwarding the IP address reserved or assigned to the requesting terminal 106 of the customer X. In a variant as depicted in Figure 4, the IP address reserved or assigned to the requesting terminal 106 is transmitted to the subsequent processing servers 224 after receipt of a new Read and Lock response from the latter (the processing server b 224 in Figure 4 for the DHCP DISCOVER message). In that case, allocation information are requested explicitly by the subsequent DHCP processing servers 224, for instance at the end of the retransmission timeout.

As shown in the example of Figure 3, the processing server b 225 receives - before the expiration of the retransmission timeout 240 - a message from the database server 225 providing the IP address which was previously allocated by the processing server a 224 to the terminal 106 (MAC@A). The processing server a 224 has been allowed to update the database of the database server 225 since its Read and Lock request has been received first by the later.

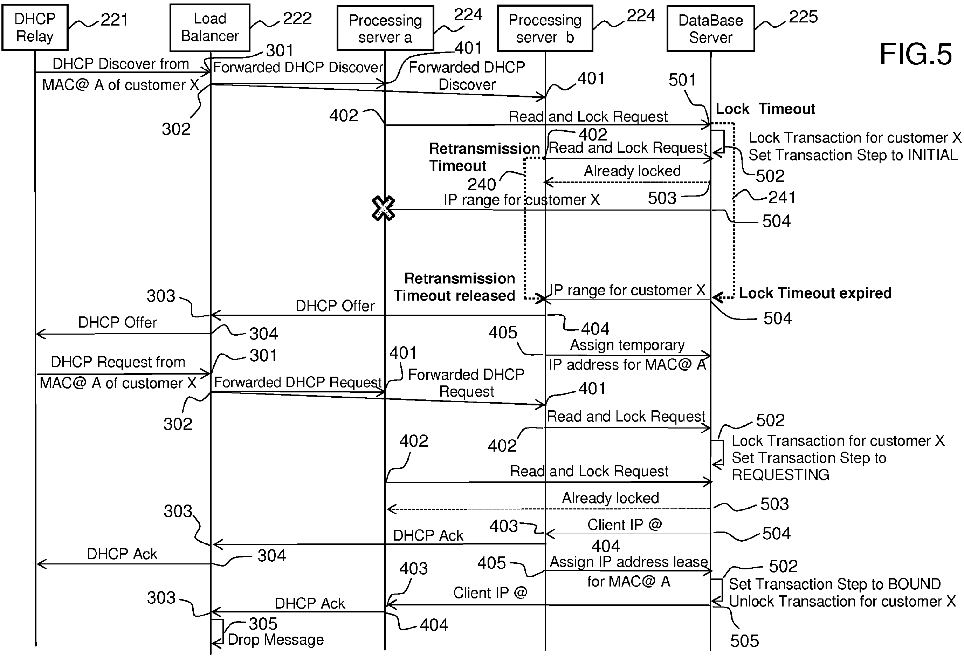

Figure 5 provides a similar embodiment to that of Figure 3, corresponding to a non-solicited message mode. In particular, as shown in Figure 5, the DHCP processing server a 224 - for which the Read and Lock request has been received first by the database server 225 - fails to determine the IP address to be allocated to the requesting terminal 106, upon receipt of the context from the database server 225. At the expiration of the lock timeout triggered upon receipt of the Read and Lock request sent by the processing server a 224, the database server 225 transmits the context information associated with the customer X to the processing server b 224 having subsequently sent a Read and Lock. The processing server b 224 further implements steps 404 and 405 above described in reference to Figure 3.

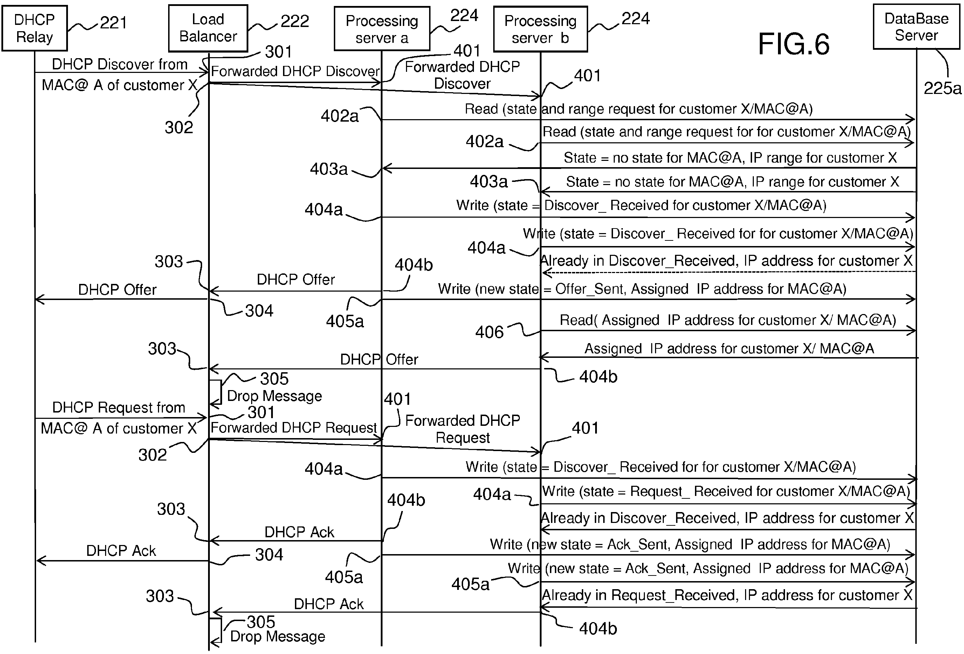

In another embodiment of the present principles depicted in Figure 6, the database server 225 of embodiments of Figures 3 to 5 is replaced by a simple database 225a (devoid of any additional server), supporting documents revisions, such as CouchDB. Load balancer 222 operates as described in reference to Figures 3 to 5.

In the example of Figure 6, upon receipt of a forwarded DHCP request message (DHCP DISCOVER, DHCP REQUEST), the processing servers 224 can operate as follows:
- obtain (at step 401) the customer identification (customer ID) from the data carried by the Bootp/Option 82 of the forwarded request message;
- request (at step 402a) a context from the database 225a based on, for instance, the customer ID and the MAC address of the requesting terminal 106 contained in the forwarded request message. In the example of Figure 6, this is achieved with a Read request. Contrary to examples of Figure 3 to 5, the database is not locked for the processing server 224 for which the Read request has been received first. There is no use of a lock timeout;
- receive (at step 403a) from the database 225a the requesting data (e.g. state of the transaction step, IP address range for the considered customer X) together with an associated revision number. Every processing servers 224 having sent a Read request can receive the requesting data;
- processing (at step 404a) the DHCP request message (DHCP DISCOVER, DHCP REQUEST) with the context information received from the database 225a. An update of the state of the transaction step for the terminal 106 of the customer X 104 in the database 225a is further requested. This can be achieved with a write request comprising the new state. If the revision number of the request matches the corresponding revision number stored in the database 225a, the update is accepted by the database 225a and the revision number is incremented. If there is a mismatch, the update is refused and an error status code is returned indicated that the state has already been updated (e.g. "Already in Discover_Received"). In the example of Figure 6, when the state of a transaction step has been updated in the database 225a before receiving a write request from the processing server b 224, the database 225a can return an "Already in Discover_Received" notification;
- deliver (step 404b) the corresponding response message (such as DHCP OFFER, DHCP ACK) to the requesting terminal 106. The response message can comprise the customer ID information within the Bootp/Option 82. When a notification is received from the database 225a after sending the write request (step 404a), no response message is delivered by the processing server 224. This is the case for the processing server b 224 shown in Figure 6 which has sent its write request (with regard to the DHCP DISCOVER message) after the one of the processing server a 224;
- requesting (at step 405a) an update of the state of the transaction step of the DHCP request and the IP address assigned or reserved, via a write request to the database 225a. The write request can comprise the following information:
   ▪ customer ID extracted from the DHCP message (Bootp/Option 82),
   ▪ MAC address : MAC address of the requesting terminal 106,
   ▪ transaction step: Discover_Received (INITIAL state), Offer_Sent (OFFERING state), Request_Received (REQUESTING state), Ack_sent (BOUND state),
   ▪ IP address : assigned or reserved (temporary) IP address for the requesting terminal 106.

In the example of Figure 6, the processing servers 224 (e.g. processing server b 224) having received an "Already in Discover_Received" notification from the database 225a can retrieve (at step 406) the updated context from the database 225a, through an appropriate Read request, and can deliver their response message (DHCP OFFER, DHCP ACK) to the load balancer 222.

Thus, according to the present principles, by duplicating the received request message, the network equipment 100 can manage failure of a processing server 224 during a transaction leading to service continuity. The risk of failure of a transaction can be decreased. In addition, since the first response is transmitted to the requesting terminal, the processing of the DHCP request can be improved and faster.

References disclosed in the description, the claims and the drawings might be provided independently or in any appropriate combination. Features may be, where appropriate, implemented in hardware, software, or a combination of the two.

Reference herein to "one embodiment" or "an embodiment" means that a particular feature, structure, or characteristic described in connection with the embodiment can be included in at least one implementation of the method and device described. The appearances of the phrase "in one embodiment" in various places in the specification are not necessarily all referring to the same embodiment, nor are separate or alternative embodiments necessarily mutually exclusive of other embodiments.

Reference numerals appearing in the claims are by way of illustration only and shall have no limiting effect on the scope of the claims.

Although certain embodiments only of the disclosure have been described herein, it will be understood by any person skilled in the art that other modifications, variations, and possibilities of the disclosure are possible. Such modifications, variations and possibilities are therefore to be considered as falling within the spirit and scope of the disclosure and hence forming part of the disclosure as herein described and/or exemplified.

The flowchart and/or block diagrams in the Figures illustrate the configuration, operation and functionality of possible implementations of systems, methods and computer program products according to various embodiments of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, or blocks may be executed in an alternative order, depending upon the functionality involved. It will also be noted that each block of the block diagrams and/or flowchart illustration, and combinations of the blocks in the block diagrams and/or flowchart illustration, can be implemented by special purpose hardware-based systems that perform the specified functions or acts, or combinations of special purpose hardware and computer instructions. While not explicitly described, the present embodiments may be employed in any combination or sub-combination.

## Claims

1. Method for processing, at a network equipment, a processing request from a terminal (106) configured to be associated with a network (105) to which the network equipment (106) can be connected,
comprising, at a load balancer (222) of the network equipment (100):
- receiving (301) from the terminal (106), a request message (DHCP DISCOVER, DHCP REQUEST) provided as part of the processing request;
- forwarding (302) concurrently the received request message to at least two processing units (224) amongst a plurality of processing units of the network equipment (100), said processing units being in connection with a common a database unit (225);
- receiving (303) one or several response messages (DHCP OFFER, DHCP ACK) from the processing units (224) after processing of the received request message;
- transmitting (304) to the terminal (106) the first received response message.

2. Method according to claim 1, wherein the load balancer (222) drops (305) the subsequent response messages (DHCP OFFER, DHCP ACK) received after the first response message received.

3. Method according to claim 1 or 2, wherein the received request message (DHCP DISCOVER, DHCP REQUEST) is forwarded with a network identification information provided by a relay agent (221) of the network equipment (100).

4. Method according to claims 1 to 3, wherein, upon receipt of a request message, a processing unit (224) sends (402) a read and lock request to the database unit (225).

5. Method according to claim 4, wherein, upon receipt of a read and lock request, the database unit (225) triggers (501) a lock timeout (241).

6. Method according to claim 4 or 5, wherein, upon receipt of a read and lock request, the database unit (225) locks (502) any transaction as regards the network (105) except for the processing unit (224) for which the read and lock request has been received first.

7. Method according to claims 4 to 6, wherein, when the reception of a read and lock request from a processing unit (224) occurs after the reception of a prior read and lock request from another processing unit (224), a notification is delivered (503) to the processing unit (224) having sent the subsequent read and lock request.

8. Network equipment for processing a processing request from a terminal (106) configured to be associated with a network (105) to which the network equipment (100) can be connected,
comprising a load balancer (222) equipped with at least one memory and at least one processing circuitry configured to perform:
- receiving (301) from the terminal (106), a request message (DHCP DISCOVER, DHCP REQUEST) provided as part of the processing request;
- forwarding (302) concurrently the received request message to at least two processing units (224) amongst a plurality of processing units of the network equipment (100), said processing units being in connection with a common a database unit (225);
- receiving (303) one or several response messages (DHCP OFFER, DHCP ACK) from the processing units (224) after processing of the received request message;
- transmitting (304) to the terminal (106) the first received response message.

9. Network equipment according to claim 8, wherein the load balancer (222) is further configured to drop (305) the subsequent response messages (DHCP OFFER, DHCP ACK) received after the first response message received.

10. Network equipment according to claim 8 or 9, wherein the received request message (DHCP DISCOVER, DHCP REQUEST) is forwarded with a network identification information provided by a relay agent (221) of the network equipment (100).

11. Network equipment according to claims 8 to 10, wherein, upon receipt of a request message, a processing unit (224) is configured to send (402) a read and lock request to the database unit (225).

12. Network equipment according to claim 11, wherein, upon receipt of a read and lock request, the database unit triggers (501) a processing timeout (241).

13. Network equipment according to claim 11 or 12, wherein, upon receipt of a read and lock request, the database unit (225) locks (502) any transaction as regards the network (105) except for the processing unit (224) for which the read and lock message has been received first.

14. Non-transitory program storage device, readable by a computer, tangibly embodying a program of instructions executable by the computer to perform a method for processing, at a network equipment (100), a processing request from a terminal (106) configured to be associated with a network (105) to which the network equipment (100) can be connected, said method comprising, at a load balancer (222) of the network equipment:
- receiving (301) from the terminal, a request message (DHCP DISCOVER, DHCP REQUEST) provided as part of the processing request;
- forwarding (302) concurrently the received request message to at least two processing units amongst a plurality of processing units of the network equipment, said processing units being in connection with a common a database unit;
- receiving (303) one or several response messages from the processing units after processing of the received request message;
- transmitting (304) to the terminal the first received response message.

15. Computer program product stored on a non-transitory computer readable medium and comprising program code instructions executable by a processor for implementing a method for processing, at a network equipment (100), a processing request from a terminal (106) configured to be associated with a network (105) to which the network equipment (100) can be connected, said method comprising at a load balancer (222) of the network equipment:
- receiving (301) from the terminal, a request message (DHCP DISCOVER, DHCP REQUEST) provided as part of the processing request;
- forwarding (302) concurrently the received request message to at least two processing units amongst a plurality of processing units of the network equipment, said processing units being in connection with a common a database unit;
- receiving (303) one or several response messages from the processing units after processing of the received request message;
- transmitting (304) to the terminal the first received response message.
